## Europäisches Patentamt
## European Patent Office
## Office européen des brevets

(19)

(11) Veröffentlichungsnummer: **0 144 940**
**B1**

(12) **EUROPÄISCHE PATENTSCHRIFT**

(45) Veröffentlichungstag der Patentschrift:
**09.03.88**

(21) Anmeldenummer: **84114591.5**

(22) Anmeldetag: **30.11.84**

(51) Int. Cl.⁴: **C 09 B 67/42**, C 09 K 3/22,
C 09 B 67/20, G 01 N 15/00,
C 09 C 3/08, C 09 C 3/10

(54) **Dauerhaft staubungsfreie Pigment - und Farbstoffpräparate und Verfahren zu ihrer Herstellung.**

(30) Priorität: 02.12.83 DE 3343742
02.12.83 DE 3343743
08.12.83 DE 3344463
08.12.83 DE 3344464

(43) Veröffentlichungstag der Anmeldung:
**19.06.85 Patentblatt 85/25**

(45) Bekanntmachung des Hinweises auf die Patenterteilung:
**09.03.88 Patentblatt 88/10**

(84) Benannte Vertragsstaaten:
**BE DE FR GB IT NL SE**

(56) Entgegenhaltungen:
EP - A - 0 023 638
EP - A - 0 026 489
EP - A - 0 056 160
DE - A - 2 523 096
DE - C - 274 642
FR - A - 2 119 583
FR - A - 2 373 593
GB - A - 576 100

CHEMICAL ABSTRACT, Band 96, Nr. 22, Mai 1982, Seite 84, Zusammenfassung 182693r, Columbus, Ohio, US

(73) Patentinhaber: **Dr. Hans Heubach GmbH & Co. KG,
Heubachstrasse Postfach 1160,
D-3394 Langelsheim 1 (DE)**

(72) Erfinder: **Gawol, Manfred, Altenauer Strasse 45,
D-3392 Clausthal-Zellerfeld (DE)**
Erfinder: **Adrian, Gerhard, Dipl.-Chem., Talstrasse 20a,
D-3380 Goslar 1 (DE)**

(74) Vertreter: **Patentanwälte Müller-Boré, Deufel, Schön,
Hertel, Lewald, Otto, Postfach 26 02 47 Isartorplatz 6,
D-8000 München 26 (DE)**

## Beschreibung

Bei Pigmenten und Farbstoffen versucht man in zunehmendem Masse Staub und staubungsfreie Zubereitungen herzustellen, die bei der Verarbeitung keine staubförmigen Emissionen verursachen. Solche staubungsfreien Zubereitungen sind zur Vermeidung von farblicher Kontaminierung bei der Handhabung von verschiedenartigen Produkten besonders erwünscht und erlauben auch ein genaues Dosieren. Staubungsverluste werden vermieden und das sauberere und sicherere Arbeiten mit solchen Zubereitungen setzt ausserdem das Gesundheitsrisiko beim Arbeiten mit toxischen Pigmenten und Farbstoffen herab.

Der sicherste Weg führt über Pastenpräparationen, wobei von Additiven, wie oberflächenaktiven Stoffen und Lösungsmitteln so viel zugegeben wird, dass ein nichtstaubender pastöser Zustand erreicht wird. In diese Pasten werden häufig auch gleich die noch für den besonderen Anwendungszweck erforderlichen Mittel, wie Dispergierhilfsmittel, Antiabsetzmittel und Bindemittel eingearbeitet. Die Pigmentkonzentration in solchen Pasten ist abhängig von der Feinheit, der Textur und dem Bindemittelbedarf des jeweiligen Pigmentes und kann zwischen ca. 30 und 90% liegen. Man geht bei der Herstellung der Pigmentpasten von getrocknetem Pigment aus und vermischt dieses mit den jeweiligen Komponenten.

Der Nachteil der Pigmentpasten ist darin zu sehen, dass diese schlecht dosierbar sind und eine sorgfältige Reinigung der Verpackungsgebinde notwendig macht.

Ziel der vorliegenden Erfindung ist es, staubungsfreie Pigment- und Farbstoffpräparate herzustellen, die noch rieselfähig sind und dadurch eine einfache Dosierung und Verwiegung ermöglichen und diesen Zustand dauerhaft beibehalten.

Es gibt schon eine ganze Reihe von bekannten Methoden. Gemäss DE-OS 27 23 921 wird die Staubungsneigung von Metallchromaten unterdrückt, indem eine Kombination von Estern der Phthal- und Terephthalsäure mit Estern von Fettsäuren und oberflächenaktiven Stoffen einer wässrigen Pigmentaufschlämmung zugegeben und nach Filtrieren getrocknet wird. Derartige Präparate zeigen geringere Staubung, sind jedoch nicht dauerhaft staubungsfrei. So ergab ein nach Beispiel 1 dieser Patentanmeldung hergestelltes Produkt einen mit dem Heubach- Staubungsmessgerät ermittelten Staubungswert von 83 mg/ 100 g. Weitere Methoden und Mittel zeigen die DE-OS 29 31 771, DE-OS 25 23 096, US-PS 35 60 134, EU-OS 00 56 160 und DE-OS 28 41 566.

In der obengenannten DE-A-2 523 096 sowie in EP-A-23 638 wird der Zusatz eines fertigen Gemisches aus oberflächenaktivem Mittel und Mineralöl zu entweder Farbstofflösungen oder -dispersionen oder zu trockenen Farbstoffpräparaten beschrieben, d.h. dass die beiden Zusatzkomponenten nur in das nasse oder nur in das trockene Farbstoffpräparat eingearbeitet werden, was wiederum zu relativ hohen Staubungswerten der erhaltenen Verfahrensprodukte führt. Das aus der DE-A-274 642 bekannte Vermahlen organischer Farbpulver mit Mineralöl zur Verhinderung des Staubens ist erwiesenermassen zur Erzielung ausreichend staubungsfreier Farbstoffpräparate ungeeignet und die in Chemical Abstracts, Band 96, Nr. 22, 1982, S. 84, angegebene Zusammenfassung 182 693r und die zugrundeliegende CS-A-190 255 zeigen die Behandlung von Küpenfarbstoffen durch Trocknung einer wässrigen Dispersion des Farbstoffs mit 1 bis 10% oberflächenaktivem Mittel und Homogenisierung des trockenen Farbstoffproduktes mit 0,1 bis 1% eines Siliconöls, wobei aber bei der praktischen Verfahrensdurchführung ausserordentlich hohe Mengen weiterer Zusatzstoffe zugegeben werden, die das Gewicht des Farbstoffes im fertigen Präparat schliesslich übersteigen und dieses nur zur Weiterverarbeitung in wässrigen Systemen empfehlenswert machen.

Gegenstand der vorliegenden Erfindung sind dauerhaft staubungsfreie Pigment- und Farbstoffpräparate, die neben 75 bis 97,5% Pigment einen oberflächenaktiven Stoff in einer Menge von 0,5 – 10% und ein Mittel, das bei starker Scherbeanspruchung die getrocknete homogene Mischung aus Pigment bzw. Farbstoff und oberflächenaktivem Stoff zum Schmierpunkt bringt, in einer Menge von 2 bis 25% enthalten, und sich beim Schmierpunkt, wie definiert, befinden. Als oberflächenaktiver Stoff kann jedes geeignete oberflächenwirksame Mittel verwendet werden, das für den jeweiligen Pigment- bzw. Farbstofftyp und den späteren Verwendungszweck geeignet ist, z.B. ionische oder nichtionische handelsübliche Mittel. Besonders bevorzugt wird jedoch ein langkettiger Polyester vom Typ «hochwirksame Dispergiermittel», insbesondere ein Polyester, der sich von einer gesättigten oder ungesättigten aliphatischen ω-Hydroxykarbonsäure mit mindestens 4 Kohlenstoffatomen zwischen der Hydroxygruppe und der Karbonsäuregruppe und insgesamt mindestens 9 Kohlenstoffatomen einschliesslich der Karboxygruppe oder von einem Gemisch einer solchen Hydroxykarbonsäure und einer von Hydroxygruppen freien Karbonsäure, insbesondere einer solchen mit bis zu 20 C-Atomen, ableitet.

Zu diesen geeigneten Polyestern gehören auch diejenigen, die in der DE-OS 21 62 484 beschrieben sind, auf die hier ausdrücklich Bezug genommen sei.

Wesentlich ist dabei, dass der oberflächenaktive Stoff nicht auf das trockene Pigment aufgebracht wird oder das Pigment schon einmal getrocknet wurde, sondern dass das noch feuchte Pigment, wie es aus der Produktion kommt, mit dem oberflächenaktiven Stoff behandelt wird, da sich sonst nicht die gesuchten Oberflächeneigenschaften einstellen. Das Mittel wird daher zweckmässig auch mit dem Schlamm des Pigmentes gemischt und dann wird erst getrocknet. Der Begriff Pigment umfasst auch Farbstoffe.

Als Substanz, welche nach Einbringen in das zu erhaltende trockene Gemisch von Pigment und oberflächenaktivem Stoff bei starker Scherbeanspruchung zum Schmierpunkt der Mischung führt, kann jede Substanz verwendet werden, welche diesen Effekt eintreten lässt, wobei gleich den anwendungstechnischen Erfordernissen der Verwendungsgebiete, z.B. Farben, Lacke, Druckfarben und Kunststofffärbung, Rechnung getragen werden kann. Genannt seien Wasser, organische Lösungsmittel, Weichmacher und durch höhere Temperaturen flüssig werdende Stoffe wie z.B. Wachse. Zweckmässig sind hier Mittel, welche sich nicht oder nicht wesentlich verflüchtigen. Aus wirtschaftlichen Gründen wird in der Regel Mineralöl bevorzugt, da es zu ausgezeichneten Ergebnissen führt und preisgünstig ist.

Als Mineralöl kommen insbesondere bei Raumtemperatur flüssige aliphatische, alizyklische und/oder aromatische Kohlenwasserstoffe in Betracht, deren Siedepunkt über 70 °C liegt. Bevorzugt sind aliphatische Kohlenwasserstoffe, die gegebenenfalls unterschiedliche Mengen an zykloaliphatischen und/oder aromatischen Kohlenwasserstoffen enthalten können. Dies umfasst also sowohl technische Mineralöle aus unterschiedlich raffinierten Erdölen wie auch synthetische Kohlenwasserstoffe, beispielsweise Fischer-Tropsch-Gemische mit den angegebenen Siedebereichen. Dies umfasst also alle unverseifbaren überwiegend aus Kohlenwasserstoffen bestehenden Stoffe beliebiger Herkunft, beispielsweise aus Erdöl, aus Teeren oder ihren Destillationsprodukten oder aus der Verschwelung.

Insbesondere bevorzugt sind synthetische Isoparaffine. Es eignet sich jedoch auch Wasser gut, wobei bei geringen Mengen an oberflächenaktivem Mittel insbesondere 10 bis 15% Wasser eingesetzt werden. Bei mit Wasser staubfrei gemachten Präparaten soll das Endprodukt dann wasserdicht bzw. dampfdicht verpackt werden, so dass keine merklichen Mengen Wasser entweichen können.

Diese dauerhaft staubungsfreien Pigmentpräparate werden hergestellt, indem man dem Filterschlamm des Pigmentes eine geeignete oberflächenaktive Substanz in einer Menge von 0,5 bis 10 Gew.-%, bezogen auf das Gesamtgewicht des Endproduktes, zusetzt und nach homogener Verteilung die Kombination aus Pigment und oberflächenaktivem Stoff, ggf. nach Isolierung als Presskuchen, trocknet und das getrocknete Produkt danach mit einem Mittel, welches bei starker Einwirkung von Scherkräften das Gemisch zum Schmierpunkt führt, insbesondere Mineralöl vom Siedebereich 70 bis 360 °C vorzugsweise 180 bis 280 °C und vor allem 180 bis 250 °C unter Anwendung einer intensiven Scherbeanspruchung mischt bis der Schmierpunkt erreicht ist und dann ggf. in an sich bekannter Weise nachgranuliert.

Wenn Wasser als Mittel zur Erzielung des Schmierpunktes verwendet werden soll, kann dieses Wasser nachträglich zugesetzt werden oder das Gemisch von Pigment bzw. Farbstoff und oberflächenaktivem Mittel, das auch als Presskuchen vorliegen kann, wird nur unvollständig getrocknet, so dass ein Restwassergehalt von 2 bis 25%, insbesondere 10 bis 15% verbleibt und dann wird das so erhaltene Gemisch unter Scherbeanspruchung bis zum Schmierpunkt gebracht und ggf. nachgranuliert. Dieser Wassergehalt ist dann, abgesehen von geringfügigen Veränderungen während der weiteren Verarbeitung, auch im Endprodukt enthalten.

Die homogene Verteilung der oberflächenaktiven Substanz im Filterschlamm des Pigmentes erfolgt durch gründliches Mischen in bekannter Weise. Die Isolierung als Presskuchen erfolgt mittels geeigneter Filterapparaturen, wie z.B. Filterpressen, Trommelfilter, Nutschen, etc., welche einen Presskuchen oder ein äquivalentes hinreichend von Wasser befreites Produkt ergibt, das in technisch sinnvoller Weise der Trocknung zugeführt werden kann.

Die Behandlung mit dem zum Schmierpunkt führenden Mittel erfolgt z.B. in Mischapparaturen wie Kneter, Intensivmischer, Schaufelmischer oder irgendeiner anderen geeigneten Einrichtung, welche eine hinreichende Scherbeanspruchung erzeugt und dazu führt, dass das Produkt bei der Behandlung innerhalb von längstens etwa 2 Stunden den Schmierpunkt erreicht. Bevorzugt werden Grade der Scherbeanspruchung, die innerhalb von 15 bis 45 Min., insbesondere innerhalb von etwa einer halben Stunde, zum Schmierpunkt führen. Dabei fällt das Produkt gewöhnlich als rieselfähiges Feingranulat an, das praktisch staubungsfrei ist.

Der Schmierpunkt im Sinne dieser Patentanmeldung ist dann erreicht, wenn sich noch nicht eine zusammenhaftende kittartige Masse gebildet hat, wie sie z.B. nach der Ölzahlbestimmung nach DIN 531 99 (siehe auch Ullmanns Encyklopädie der technischen Chemie, 4. Auflage, Band 18, Seite 565) definiert ist. Der im Sinne dieser Patentanmeldung angegebene Schmierpunkt ist dann erreicht, wenn sich das oben angegebene rieselfähige Feingranulat gebildet hat, das staubungsfrei ist und in geringem Umfange zu einem Schmiereffekt an den Wandungen der Mischaggregate führt. Die zur Erzielung dieses Schmierpunktes benötigte Menge an staubbindenden Mittel, z.B. Öl, ist also geringer als die Ölmenge, die für die Bestimmung der Ölzahl nach DIN 531 99 benötigt wird.

Durch die Zugabe der oberflächenaktiven Substanz zum Pigmentschlamm vor der Trocknung wird eine optimale Benetzung erreicht, die es ermöglicht, durch Zugabe von z.B. Mineralöl zum getrockneten Produkt aus Pigment und oberflächenaktiver Substanz praktisch absolut staubungsfreie Pigmentpräparationen zu bekommen, wobei nur relativ niedere Anteile an Mineralöl nötig sind. Bei Zugabe der gleichen Menge oberflächenaktiver Substanz und Mineralöl zum vorher getrockneten Produkt benötigt man zur Erzielung der gleichen Staubungsfreiheit fast die doppelte Menge Mineralöl, z.B. über 20% statt 10% nach dem Verfahren der Erfindung.

Dieses Verfahren lässt sich grundsätzlich auf alle Pigmente und Farbstoffe anwenden, die im nassen Zustand anfallen und als Filterschlamm abgetrennt werden. Es lässt sich gleichermassen anwenden, für anorganische und organische Pigmente und Farbstoffe, wie z.B. Bleichromat, Bleimolybdat, Zinkchromat, Mischphasenpigmente, wie z.B. Nickeltitangelb, Chromtitangelb, etc., Phthalocyanine, Anthrachinone, Azopigmente, verlackte Azopigmente, Disazokondensations-Pigmente, Isoindoline, indigoide Farbstoffe, Chinachridone, Perylene u.a.

Das Gemisch von Pigment- bzw. Farbstoffschlamm, der üblicherweise ca. 50% Wasser enthält, und oberflächenaktiven Mittel, wird nach gründlichem Homogenisieren entweder direkt der Trocknung zugeführt oder, wenn man den Wassergehalt weiter vermindern will, wird es in einer geeigneten Presse, z.B. einer Hochdruckpresse, weiter entwässert und erst dann der Trocknung zugeführt, was Trocknungskosten spart. Man kann so Presskuchen mit bis zu 85% Feststoffgehalt erzielen. Das Trocknen dieser Mischung kann in üblicher Weise, z.B. auf Band- oder Hängebandtrocknern mit einer Umgebungstemperatur von 120 bis 130 °C oder in Vakuumtrocknern, wo normalerweise Temperaturen von 100 bis 120 °C angewandt werden, durchgeführt werden. Da die Mischung organisches Material enthält, ist darauf zu achten, dass die Trocknungsbedingungen, insbesondere die Temperatur, nicht zu einer Schädigung des Materials führen, indem z.B. örtliche Überhitzungen vermieden werden.

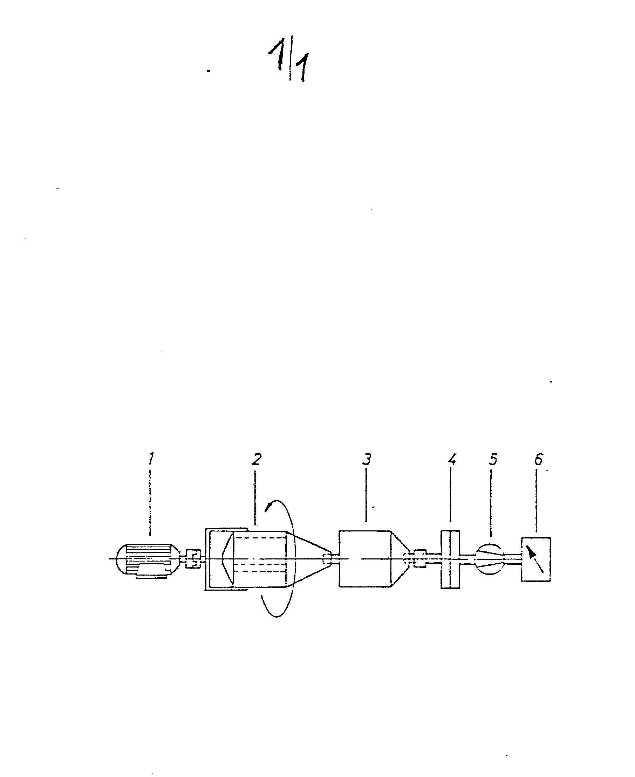

Die Bestimmung des Staubungsverhaltens wurde in einem Heubach-Staubungsmessgerät durchgeführt, das in der beiliegenden Figur gezeigt ist.

Dieses Staubungsmessgerät wurde entwickelt, um eine möglichst genaue Analyse über die Staubungsneigung pulverförmiger und granulierter Stoffe vornehmen zu können, da quantitative Aussagen über das Staubungsverhalten wichtig für die verfahrenstechnische und betriebliche Sicherheit sind. Während bisher die Staubungsneigung häufig in Analogie zu den vorhandenen Feinstanteilen im Ausgangsgut bzw. durch Schätzen beurteilt wurde, derartige Methoden jedoch zu erheblichen Fehlern führen können, weil Staubpartikel häufig erst durch die Art der Bewegung und durch Abrieb entstehen, wird hier die Staubungsneigung beim Materialhandling praxisnah erfasst. Dazu bleibt das Testmaterial während des gesamten Messvorganges in Bewegung.

Dies erfolgt dadurch, dass Pulver bzw. granulatförmige Materialien in einem Staubentwicklungsgefäss 2 von 2,5 l Inhalt 5 Minuten bei 30 U/min bewegt werden. Eingebaute Schikanen simulieren Fördervorgänge, wobei die Staubanteile von einem Luftstrom erfasst, aus dem Staubentwicklungsgefäss herausgetragen und auf einem Filter 4 mit definierter Porosität abgeschieden werden. Gröbere Partikel werden in einem Grobabschneider 3 zurückgehalten. Die Luft wird durch die Vakuumpumpe 5 durch das Gerät angesaugt und durch eine Schleuse mit Luftdurchsatzzähler 6 registriert und ausgebracht. Ein Motor 1 treibt das Gerät an.

Gegenüber einem Staubungsmessgerät, wo der Staubwert durch die Schwächung eines durch einen Auffangbehälter gehenden Lichtstrahls gemessen wird, die durch das Aufwirbeln von Farbstoffstaub beim einmaligen Herabfallen in diesem Behälter hervorgerufen wird, hat dieses Gerät den Vorteil, dass eine tatsächliche praxisnahe Messung des Zustandes, wie er bei Förder-, Misch- und Abfüllvorgängen auftritt, gemessen wird.

Testdaten:

| | | |
|---|---|---|
| Sinwaage | 100 | g |
| Messzeit | 5 | min |
| Umdrehungen | 30 | /min |
| Luftdurchfluss | 0,25 | l/sec |
| Staubungsentwicklungsgefäss | 2,50 | l |

Die folgenden Beispiele erläutern die Erfindung, wobei als staubungsfreie Präparationen solche angesehen werden, die mit dem Heubach Staubungsmessgerät gemessen, Staubungswerte von 0 bis max. 5 mg/100 g ergeben:

Beispiel 1

1 kg Chromatpigmentschlamm 50%ig wurde mit 15 g der oberflächenaktiven Substanz auf Polyesterbasis versetzt und mit Hilfe eines Rührers gut vermischt. Nach der Trocknung wurde das Pigment in einem Kneter oder Schaufelmischer mit 10% Mineralöl versetzt und der intensive Mischvorgang solange fortgesetzt, bis eine gleichmässige Verteilung der Zusatzstoffe erreicht war. Dieses gibt sich zu erkennen durch die Entstehung eines rieselfähigen, nicht staubenden Feingranulats. Üblicherweise benötigt man dazu ca. 30 Minuten. Von dem behandelten Fertigprodukt wurde eine Staubungsmessung mit dem Heubach-Staubungsmessgerät gemacht, wobei sich ein Wert von 0 mg/100 g Pigment ergab. Die nicht behandelte, getrocknete Pigmentprobe ergab einen Staubungswert von 90 mg/100 g.

Beispiel 2

Zu 1 kg Zinkchromatschlamm 50%ig wurden 10 g der oberflächenaktiven Substanz auf Polyesterbasis gegeben und unter Rühren gut gemischt. Nach der Trocknung wurde das Pigment in einem Kneter oder Schaufelmischer mit 13% Mineralöl versetzt und solange den Scherwirkungen des Mischaggregates ausgesetzt, bis das Mineralöl vollkommen homogen verteilt war. Es entstand nach ca. 30 Minuten ein staubungsfreies, rieselfähiges Feingranulat, dessen Staubungswert, gemessen mit dem Heubach-Staubungsmessgerät, gleich 0 war. Die nicht behandelte, getrocknete Zinkchromatpigmentprobe ergab einen Staubungswert von 250 mg/100 g.

Beispiel 3

300 g Phthalocyaninblau-Presskuchen (Festkörper ca. 36%) wurden mit einer Mischung von 150 g Isopropanol, 5,5 g Aminomethylpropanol und 8,2 g der oberflächenaktiven Substanz auf Polyesterbasis versetzt und nach Zugabe von 100 g Wasser ca. 30 Minuten mit einem Dissolver gerührt. Der so präparierte Pigmentschlamm wurde im Trockenschrank getrocknet und nach Zwischenvermahlung auf einer Labormühle, in einer Mischapparatur mit 20% Mineralöl (auf Feststoffe bezogen) versetzt und der intensive Mischvorgang solange fortgesetzt, bis eine gleichmässige Verteilung der Zusatzstoffe erreicht war. Nach 20 – 30 Minuten hatte sich ein staubungsfreies rieselfähiges Feingranulat gebildet, dessen Staubungswert gemessen mit dem Heubach-Staubungsmessgerät gleich 5 mg/100 g war. Nicht präparierte Phthalocyaninpigmente haben Staubungswerte von 2500 bis 3500 mg/100 g.

Beispiel 4

Zu 1568 g eines Anthrachinonpigmentschlamms (Feststoff ca. 28%) wurde eine Mischung aus 23 g Aminomethylpropanol und 25 g der oberflächenaktiven Substanz auf Polyesterbasis zugegeben und ca. 30 Minuten im Dissolver gerührt. Zur Verhinderung der Schaumbildung wurden noch 7,5 g eines Entschäumers hinzugefügt. Der so präparierte Schlamm wurde im Trokkenschrank getrocknet und anschliessend auf einer Labormühle vorvermahlen.

Die Präparation wurde in einen Mischer gegeben, mit 20% Mineralöl versetzt und der Mischvorgang ca. 30 Minuten fortgesetzt. Danach entstand ein rieselfähiges, nichtstaubendes Feingranulat mit einem Staubungswert von unter 5 mg/100 g Pigment gemessen mit dem Heubach-Staubungsmessgerät. Getrocknete, nicht präparierte Anthrachinonpigmente haben ausserordentlich hohe Staubungswerte von 3500 bis 4500 mg/100 g.

Beispiel 5

1 kg Chromatpigmentschlamm 50%ig wurde mit 15 g der oberflächenaktiven Substanz auf Polyesterbasis versetzt und mit Hilfe eines Rührers gut vermischt. Nach der Trocknung wurde das Pigment in einem heizbaren Kneter mit 15% geschmolzenem Wachs versetzt und der intensive Mischvorgang solange fortgesetzt, bis eine gleichmässige Verteilung des Zusatzstoffes erreicht war. Dieses gibt sich zu erkennen durch die Entstehung eines rieselfähigen nicht staubenden Granulats. Üblicherweise benötigt man dazu ca. 30 Minuten. Das Pigment wurde vorher auf eine Temperatur gebracht, die über dem Schmelzpunkt des Wachses lag. Gearbeitet wurde mit einem Wachs, dessen Schmelzpunkt 79 °C betrug.

Die Staubungsmessung von der so hergestellten Präparation betrug 5 mg/100 g. Gemessen wurde mit dem Heubach-Staubungsmessgerät.

Selbstverständlich können den erfindungsgemässen Präparaten auch gleich die für den besonderen Anwendungszweck erforderlichen Hilfsmittel, wie Dispergierhilfsmittel oder Antiabriebmittel zugegeben werden. Die Zugabe erfolgt zweckmässig mit der Zugabe des den Schmierpunkt bewirkenden Mittels b). Ebenso können, wie dies in einem der Beispiele gezeigt ist, Hilfsmittel für das Mischen bzw. Kneten, z.B. Antischaummittel, beim jeweiligen Arbeitsgang zugegeben werden. Bei allen diesen Hilfsstoffen werden die in der Technik üblichen und wohlbekannten Mengen verwendet, die sich mit wenigen Vorversuchen auch für einen jeweiligen speziellen Fall, also in Abhängigkeit von der Menge und Art des oberflächenaktiven Mittels und Menge und Art des den Schmierpunkt herbeiführenden Mittels feststellen lassen.

Als bevorzugte Ausführungsformen der Erfindung seien genannt:

Als Zusatz b liegt in den Präparaten ein flüssiger oder über 50 °C flüssig werdender Zusatzstoff vor. Als flüssiger Zusatzstoff, kann insbesondere Wasser oder ein Mineralöl vom Siedebereich bis 360 °C, vorzugsweise 180 – 280 °C, vorliegen, während der bei höherer Temperatur flüssige Zusatzstoff vorzugsweise einen Schmelzpunkt von 50 – 200 °C aufweist. Die zum Schmierpunkt führende Substanz wird in einer Menge von 2 bis 25 Gew.-%, bezogen auf Endprodukt, bzw. in einer solchen Menge, dass sich im Endprodukt ein Gehalt von 2 bis 25 Gew.-% ergibt (falls Verdunstung auftritt) zugesetzt. Beim Mineralöl beträgt der Zusatz vorzugsweise 5 bis 15%, insbesondere 10%. Der über 50 °C flüssig werdende Zusatzstoff kann insbesondere eine Wachs- bzw. Paraffinsubstanz sein. Der mit der oberflächenaktiven Substanz homogenisierte Filterschlamm des Pigments oder Farbstoffes wird mittels geeigneter Filteranlagen, wie Filterpresse, Nutsche, Trommelfilter und dergleichen als Presskuchen isoliert.

Es ist wesentlich, dass mit dem oberflächenaktiven Mittel das noch feuchte Pigment behandelt wird, das lediglich mechanisch entwässert, z.B. abgepresst oder zentrifugiert ist, aber, selbst wenn ein leichter Trocknungseffekt z.B. durch Luft- oder Warmlufttrocknen eintritt, insgesamt noch feucht ist, also die Oberflächen der Pigmentteilchen nicht getrocknet sondern noch feucht sind, wenn auch die Feuchtigkeit auf diesen Oberflächen gegenüber der Feuchtigkeit, die im Presskuchen des Filterschlammes vorliegt, reduziert ist. Der Begriff Pigment umfasst auch hier Farbstoffe.

**Patentansprüche**

1. Dauerhaft staubungsfreie Pigment- und Farbstoffpräparate mit einem Zusatz von oberflächenaktiven Mitteln und Zusatzstoffen, dadurch gekennzeichnet, dass sie erhältlich sind, indem man dem Filterschlamm des Pigmentes oder des Farbstoffes mindestens ein oberflächenaktives Mittel in einer Menge von 0,5 bis 10%, bezogen auf das Gesamtgewicht des Endproduktes, zusetzt und nach homogener Verteilung die Kombination aus Pigment und oberflächenaktivem Mittel, gegebenenfalls nach Isolierung als Presskuchen, trocknet und das getrocknete Produkt danach mit Wasser, Mineralöl oder einer flüssigen oder bei 50 °C, insbesondere bei 50 bis 200 °C flüssigwerdenden Wachs- bzw. Paraffinsubstanz, die bei intensiver Scherbeanspruchung das Gemenge zum Schmierpunkt führen, in einer Menge von 2 bis 25%, bezogen auf das Gesamtgewicht des Endproduktes, versetzt, und unter Anwendung einer intensiven Scherbeanspruchung mischt, bis der Schmierpunkt erreicht ist und dann gegebenenfalls in an sich bekannter Weise nachgranuliert.

2. Präparate nach Anspruch 1, dadurch gekennzeichnet, dass der oberflächenaktive Stoff ein langkettiger Polyester vom Typ «hochwirksame Dispergiermittel» ist, der sich von einer gesättigten oder ungesättigten aliphatischen ω-Hydroxycarbonsäure mit mindestens 4 Kohlenstoffatomen zwischen der Hydroxygruppe und/oder Carbonsäuregruppe und insgesamt mindestens 9 Kohlenstoffatomen einschliesslich der Carboxygruppe oder von einem Gemisch einer solchen Hydroxycarbonsäure und einer von Hydroxygruppen freien Carbonsäure ableitet.

3. Präparat nach Anspruch 1 oder 2, dadurch gekennzeichnet, dass Wasser in einer Menge von 10 bis 15% im Endprodukt vorliegt.

4. Verfahren zur Herstellung der dauerhaft staubungsfreien Pigment- und Farbstoffpräparate nach Anspruch 1 – 3 durch Zusatz von oberflächenaktiven Mitteln und Zusatzstoffen, dadurch gekennzeichnet, dass man dem Filterschlamm des Pigmentes oder des Farbstoffes mindestens ein nach Art der Pigmente oder Farbstoffe und in Abhängigkeit vom jeweiligen Verwendungszweck geeignetes oberflächenaktives Mittel in einer Menge von 0,5–10%, bezogen auf das Gesamtgewicht des Endproduktes, zusetzt und nach homogener Verteilung die Kombination aus Pigment und oberflächenaktivem Mittel, ggfs. nach Isolierung als Presskuchen, trocknet und das getrocknete Produkt danach mit Wasser, Mineralöl oder einer flüssigen oder bei 50 °C, insbesondere bei 50 bis 200 °C flüssig werdenden Wachs- bzw. Paraffinsubstanz, die bei intensiver Scherbeanspruchung das Gemenge zum Schmierpunkt führen, in einer Menge von 2 – 25%, bezogen auf das Gesamtgewicht des Endproduktes, versetzt, und unter Anwendung einer intensiven Scherbeanspruchung mischt, bis der Schmierpunkt erreicht ist und dann ggfs. in an sich bekannter Weise nachgranuliert.

5. Verfahren nach Anspruch 4, dadurch gekennzeichnet, dass man als Ausgangsmaterial den feuchten Filterschlamm des Pigmentes oder des Farbstoffes verwendet.

6. Verfahren nach einem der Ansprüche 4 oder 5, dadurch gekennzeichnet, dass man die oberflächenaktive Substanz in einer Menge von 0,5 – 10%, vorzugsweise 1 bis 5% und insbesondere 3% verwendet.

7. Verfahren nach einem der Ansprüche 4 bis 6, dadurch gekennzeichnet, dass man die flüssige oder bei 50 °C flüssig werdende Wachs- bzw. Paraffinsubstanz in einer Menge von 5 bis 25%, vorzugsweise 15%, verwendet.

8. Verfahren nach einem der Ansprüche 4 bis 7, dadurch gekennzeichnet, dass man das oberflächenaktive Substanzen enthaltende getrocknete Produkt mit den flüssigen bzw. durch Erwärmen flüssig gemachten Zusatzstoffen versetzt und in einem geeigneten Mischer wie etwa Intensivmischer, Kneter, Schaufelmischer, solange mischt, bis der Schmierpunkt erreicht ist.

## Revendications

1. Préparations pigmentaires et tinctoriales, présentant un caractère permanent de non-dégagement de poussières, additionnées de substances tensioactives et d'additifs, caractérisées en ce qu'on peut les préparer en ajoutant à la boue de filtration du pigment ou du colorant au moins une substance tensioactive en une quantité de 0,5 à 10% par rapport au poids total du produit fini, et que, après une répartition homogène, on sèche la combinaison du pigment et de la substance tensioactive, éventuellement après isolation sous forme d'un gâteau de filtration, et qu'on ajoute ensuite au produit séché de l'eau, une huile minérale ou une substance cireuse ou paraffinique liquide ou se liquéfiant à 50 °C, en particulier entre 50 et 200 °C, qui conduisent le mélange au point de lubrification sous l'effet d'une contrainte élevée de cisaillement, et ce en une quantité de 2 à 25% par rapport au poids total du produit fini, et qu'on mélange en utilisant une contrainte élevée de cisaillement jusqu'à ce que l'on atteigne le point de lubrification, puis qu'on procède éventuellement à une post-granulation d'une manière connue en soi.

2. Préparation selon la revendication 1, caractérisées en ce que la substance tensioactive est un polyester à longue chaîne du type «dispersant à efficacité élevée», qui dérive d'un acide ω-hydroxycarboxyliques aliphatique, saturé ou insaturé, ayant au moins 4 atomes de carbone entre le groupe hydroxy et/ou l'acide carboxylique, et en tout au moins 9 atomes de carbone, en comprenant celui du groupe carboxy, ou d'un mélange d'un tel acide hydroxycarboxylique et d'un acide carboxylique exempt de groupes hydroxy.

3. Préparation selon la revendication 1 ou 2, caractérisée en ce que l'eau est présente dans le produit fini en une quantité de 10 à 15%.

4. Procédé pour la fabrication des préparations pigmentaires et tinctoriales présentant un caractère permanent de non-dégagement de poussières selon la revendication 1 – 3, par addition de substances tensioactives et d'additifs, caractérisé en ce qu'on ajoute à la boue de filtration du pigment ou du colorant, en une quantité de 0,5 – 10% par rapport au poids total du produit fini, au moins une substance tensioactive appropriée, selon la nature des pigments ou des colorants et en fonction de l'application prévue, et que, après une répartition homogène, on sèche la combinaison du pigment et de la substance tensioactive, éventuellement après isolement sous forme d'un gâteau de filtration, et qu'on ajoute ensuite au produit séché de l'eau, une huile minérale ou une substance cireuse ou paraffinique liquide ou se liquéfiant à 50 °C, en particulier entre 50 et 200 °C, qui conduisent le mélange au point de lubrification sous l'effet d'une contrainte élevée de cisaillement, et ce en une quantité de 2 à 25% par rapport au poids total du produit fini, et que l'on mélange en utilisant une contrainte élevée de cisaillement jusqu'à ce que l'on atteigne le point de lubrification, puis, éventuellement, qu'on procède à une post-granulation d'une manière connue en soi.

5. Procédé selon la revendication 4, caractérisé en ce qu'on utilise comme matière de départ la boue de filtration humide du pigment ou du colorant.

6. Procédé selon l'une des revendications 4 ou 5, caractérisé en ce qu'on utilise la substance tensioactive en une quantité de 0,5 à 10%, de préférence de 1 à 5% et en particulier de 3%.

7. Procédé selon l'une des revendications 4 à 6, caractérisé en ce qu'on utilise la substance cireuse ou paraffinique liquide ou qui se liquéfie à 50 °C en une quantité de 5 à 25%, de préférence de 15%.

8. Procédé selon l'une des revendications 4 à 7, caractérisé en ce qu'on ajoute au produit séché contenant des substances tensioactives, les additifs liquides ou liquéfiés par chauffage et que l'on mélange dans un mélangeur approprié, du genre mélangeur intensif malaxeur, malaxeur à pales, jusqu'à ce que le point de lubrification soit atteint.

## Claims

1. Permanently dust-free pigment and dyestuff formulations to which surface-active agents and adjuvants have been added, characterized in that they may be obtained by adding to the filter sludge of the pigment or of the dyestuff at least one surface- active agent in an amount of 0,5 to 10%, relative to the total weight of the end product, and, after homogeneous dispersion, drying the combination of pigment and surface-active agent, where appropriate after isolation as a press cake, and thereafter adding to the dried product an amount of 2 to 25%, based on the total weight of the end product, of water, mineral oil or a waxy or paraffinic substance which is liquid or becomes liquid at 50 °C, especially at 50 to 200 °C, which additives cause the mixture to reach smearing point under intensive shearing stress, and mixing the batch, using intensive shearing stress, until the smearing point is reached, after which the mixture is, if desired, postgranulated in a manner known per se.

2. Formulations according to claim 1, characterized in that the surface-active substance is a long-chain polyester of the «highly active dispersant» type, which is derived from a saturated or unsaturated aliphatic ω-hydroxycarboxylic acid having at least 4 carbon atoms between the hydroxyl group and/or the carboxylic acid group and having a total of at least 9 carbon atoms including the carboxyl group, or is derived from a mixture of a hydroxycarboxylic acid of this type and a carboxylic acid free from hydroxyl groups.

3. Formulation according to claim 1 or 2, characterized in that water is present in the end product in an amount of 10 to 15%.

4. Process for the preparation of the permanently dust-free pigment and dyestuff formulations according to claims 1 – 3 by adding surface-active agents and adjuvants, characterized by adding to the filter sludge of the pigment or of the dyestuff at least one surface-active agent chosen according to the nature of the pigments or dyestuffs and in dependence on the particular end use in an amount of 0,5 to 10%, relative to the total weight of the end product, and, after homogeneous dispersion, drying the combination of pigment and surface- active agent, where appropriate after isolation as a press cake, and thereafter adding to the dried product an amount of 2 to 25%, based on the total weight of the end product, of water, mineral oil or a waxy or paraffinic substance which is liquid or becomes liquid at 50 °C, especially at 50 to 200 °C, which additives cause the mixture to reach smearing point under intensive shearing stress, and mixing the batch, using intensive shearing stress, until the smearing point is reached, after which the mixture is, if desired, post-granulated in a manner known per se.

5. Process according to claim 4, characterized in that the moist filter sludge of the pigment or of the dyestuff is used as the starting material.

6. Process according to one of claims 4 or 5, characterized in that the surface-active substance is used in an amount of 0.5 – 10%, preferably 1 to 5%, and especially 3%.

7. Process according to one of claims 4 to 6, characterized in that the waxy or paraffinic substance which is liquid or becomes liquid at 50 °C is used in an amount of 5 to 25%, preferably 15%.

8. Process according to one of claims 4 to 7, characterized in that the liquid adjuvants, or adjuvants which have been liquefied by warming, are added to the dried product containing surface-active substances and the batch is mixed in a suitable mixer such as, say, a high-intensity mixer, kneader or paddle mixer, until the smearing point is reached.

1|1